# EUROPEAN PATENT APPLICATION

(11) **EP 2 849 402 A1**
(43) Date of publication of application: **18.03.2015**
(21) Application number: 13184706.3
(22) Date of filing: 17.09.2013
(51) Int. Cl.: H04L 29/06

(54) **Document based facilitation of communication**

(71) Applicant: Cloudfogger GmbH, 73033 Göppingen (DE)
(72) Inventor: Rossmanith, Tilo, Dr., 73033 Göppingen (DE)
(74) Representative: Karl, Christof

(57) **Abstract**

The present invention relates to a computer implemented method for operating a system for facilitating communication between users. A user computer creates a document code for an electronic document by applying a function to the bit representation of the electronic document. The function is configured such that the document codes for electronic documents with identical bit representations are identical, such that the document code for an electronic document is different from its bit representation and such that the bit representation of an electronic document cannot be obtained from the document code. The user computer sends this document code to a server computer. The server computer associates the user with the document code created by the user computer, identifies a group of users who are associated with the document code and facilitates communication between the user and members of the group of users, which enables the user computer to communicate with members of the group of users.

## Description

### Field of the invention

The present invention relates to a computer-implemented method for operating a server computer, a user computer and a system for facilitating communication between users. Furthermore, the present invention relates to a server computer, a user computer and a system adapted to perform said methods as well a computer program having instructions for performing said methods.

### Background of the invention

Online conversation normally requires a direct knowledge of the users which are a party to the conversation and an exchange of user credentials, such as a user name, to add users to an online conversation. With these user credentials, a user can be added to a conversation by going through a variety of menu steps. Therefore, it would be beneficial to simplify the creation and management of online conversations. Furthermore, since many online conversations center on documents, it would be helpful to tie the creation and management of an online conversation group to a document.

WO 2012/125338 describes one way of creating an online conversation centered on a document. Users taking part in an online conversation centered on a document can add other users to the conversation by including requests to add certain users to the online conversation in their document editing commands. The server recognizes these embedded requests and adds the users to the access control list of the document and thereby adds them to the conversation. However, this solution, albeit being centered on a document, requires the document to be stored on the server and requires the user wanting to add other users to the conversation to know the user credentials of the other users. This solution does not ensure that all users who should be part to the conversation centered on the document are actually part of the conversation as well as this solution requires the document to be stored on a server. Additionally, a user might know another user who should be part of the conversation but does not know the other user's credentials or if he does know the credentials, these needed to be exchanged first, adding another step to the adding process.

### Summary of the invention

It is therefore the object of the invention to provide a solution how to create and manage an online conversation without the need to exchange user credentials and without the need to centrally store a document on a server.

A first embodiment of the invention provides a computer-implemented method for operating a server computer for facilitating communication between users, the method comprising the steps of receiving a document code from a user computer, the document code having been created for an electronic document held on the user computer by applying a function to the bit representation of the electronic document, the function being configured such that the document codes for electronic documents with identical bit representations are identical, such that the document code for an electronic document is different from its bit representation, and such that the bit representation of an electronic document cannot be obtained from the document code; associating the user with the document code; using the document code created by the user, identifying a group of users who are associated with the document code; and facilitating communication between the user and members of the group of users.

A second embodiment of the invention provides a computer-implemented method for operating a user computer for facilitating communication between users, the method comprising the steps of creating a document code for an electronic document held on the user computer by applying a function to the bit representation of the electronic document, the function being configured such that the document codes for electronic documents with identical bit representations are identical, such that the document code for an electronic document is different from its bit representation, and such that the bit representation of an electronic document cannot be obtained from the document code sending the document code to the server computer; and communicating with members of a group of users who were identified by the server computer, using the document code created by the user, to be associated with the document code, the communication being facilitated by the server computer.

A third embodiment of the invention provides a computer-implemented method for operating a system for facilitating communication between users, the method comprising the steps of on a user computer, creating a document code for an electronic document held on the user computer by applying a function to the bit representation of the electronic document, the function being configured such that the document codes for electronic documents with identical bit representations are identical, such that the document code for an electronic document is different from its bit representation, and such that the bit representation of an electronic document cannot be obtained from the document code; transmitting the document code from the user computer to a server computer; on the server computer, associating the user with the document code, using the document code created by the user computer, identifying a group of users who are associated with the document code, and facilitating communication between the user and members of the group of users; and on the user computer, communicating with members of the group of users.

According to the fourth embodiment of the invention, in any of the preceding embodiments, all members of the group can communicate with one another. This facilitates communication of the users between each other without requiring any other information about the user.

According to the fifth embodiment of the invention, in any of the preceding embodiments, the group of users comprises all users who are associated with the document code. This makes it simpler for users to communicate with other users having the document as a common factor among themselves and without needing any other information about the users.

According to the sixth embodiment of the invention, in any of the preceding embodiments, the server computer maintains a list of document codes, and for each document code on that list, a list of users associated with the document code. This list of document codes associated with a list of users forms a group. This group can then communicate among themselves. The server can also provide the list of document codes and the user associated the documents to other users when requested.

According to the seventh embodiment of the invention, in the sixth embodiment, the server computer, upon receiving a document code already comprised by the list of document codes adds the user from whom the document code was received to the list of users associated with the document code. This ensures that the document codes are entered only once in the server and no duplicate entry of document codes are provided. Furthermore adding the user to the already existing document code associates the new user with the existing document code in the server.

According to the eighth embodiment of the invention, in the sixth embodiment, the server computer, upon receiving a document code not comprised by the list of document codes adds the document code to the list of document codes, creates a new list of users associated with the document code and adds the user from whom the document code was received to the newly created list. This facilitates adding new document codes in the server and thereby providing a larger database to incorporate multiple document codes.

According to the ninth embodiment of the invention, in any of the preceding embodiments, the function ensures that document codes for two electronic documents with different bit representations differ from one another with a high probability. It is to ensure that each unique electronic document has its unique document code so that the users are associated with the document to form a group on the basis of the document code which only consisting of users with the same as electronic document.

According to the tenth embodiment of the invention, in the ninth embodiment, the function ensures that document codes for two electronic documents with different bit representations differ from one another with an average probability of at least 99%.

According to the eleventh embodiment of the invention in any of the preceding embodiments, the bit representation of the electronic document can be at least 1000 times longer than the bit representation of the document code. This reduces the amount of data, which needs to be transferred to the server computer in order to prepare group. Secondly, it eliminates the possibility of reversing the function, to generated the bit representation of the electronic document from the document code. Finally, it also reduces the amount of storage required to store the document code in the server.

According to the twelfth embodiment of the invention in any of the preceding embodiments, the function is a hash function. Using hash functions meets the criteria of performing an irreversible function, high probability of uniqueness of the resultant hash value and a small space requirement.

According to the thirteenth embodiment of the invention, in any of the preceding embodiments, a connection is established between the user computer and the server computer. This could be any communication connection to facilitate transfer of information about the users and facilitate communication between the users.

According to the fourteenth embodiment of the invention, in any of the preceding embodiments, the communication between the user and members of the group of users is facilitated by the server computer transmitting information about members of the group of users to the user. By transmitting the information about the members of the group to and the users, the server facilitates the user to identify which other users have the same electronic document.

According to the fifteenth embodiment of the invention, in the fourteenth embodiment, the user communicates with members of the group of users by exchanging communication content data directly, i.e. not through the server computer.

According to the sixteenth embodiment of the invention, in any one of the first to thirteenth embodiments, the communication between the user and members of the group of users is facilitated by the server computer relaying communication content data between the user and members of the group of users. By relaying the communication content data between the users, the server provides the user with privacy since the other user does not have information on direct access to the electronic document.

According to the seventeenth embodiment of the invention, in the sixteenth embodiment when depending from the thirteenth embodiment, the communication content data is relayed via the connection between the user computer and the server computer. According to this eighteenth embodiment of the invention, in any of the sixteenth or seventeenth embodiments, the user can allow members of the group to obtain contact information with the help of which members of the group can contact the user directly, i.e. not through the server computer.

This allows the users to communicate directly with the other users without the need for the server thereby providing higher security of the communication since the server does not have access to the communication between the users.

According to the nineteenth embodiment of the invention, in any of the preceding embodiments, a user identifier is transmitted from the user computer to the server computer, the server computer identifies the user with the help of the user identifier, and the association of the user with a document code is based on the identification of the user. Transmitting of user identifiers by the user computer ensures that the server computer is able to identify the user having the document code and associate the user to a document code in the server.

According to the twentieth embodiment of the invention, in the nineteenth embodiment, wherein the user identifier is generated by the server computer or the user computer and stored on the user computer. The unique user identifier is generated by either the user on the server and is stored in the user computer such that it may be transmitted along with the document code whenever such transmission occurs.

According to the twenty-first embodiment of the invention, in any of the nineteenth or twentieth embodiments the server computer has no information of the correlation between the true identity of the user and his user identifier. Since the server computer has no information of the correlation between the true identity of the user and his user identifier the privacy of the user is maintained and only the technical information relating to the user computer is available to the server computer. According to the second embodiment of the invention, in one of nineteenth or twentieth embodiment the user identifier comprises a login and/or a password. By providing the possibility of the user identifier having a login and/or a password, the invention provides a user the option to communicate with other users irrespective of which user computer the user may be using.

According to the twenty-third embodiment of the invention, in the thirteenth embodiment when depending from any of the nineteenth to twenty-second embodiment, the user identifier is transmitted upon initiation of the connection to the server computer. By transmitting the user identifier upon initiation of the connection to the server, the user computer does not need to send the user identifier every time a new document code is transmitted to the server computer. That is, the user identifier is valid as long as a session of connection is open between the user computer and the server computer.

According to the twenty-fourth embodiment of the invention, in nineteenth to twenty-second embodiments the user identifier is transmitted together with the document code.

According to the twenty-fifth embodiment of the invention, in any of the preceding embodiments the user computer holds, for the electronic document held on the user computer, a list of members of the group of users, and wherein the information identifying the list of members of the group of users has been transmitted from the server computer to the user computer. By providing the user computer with the list of members of the group having the electronic document, the server computer gives the user computer the possibility to select a particular user and communicate with the user.

According to the twenty-sixth embodiment of the invention, in the twenty-fifth embodiment who upon access on the user computer of the electronic document held on the user computer, one or more members of the group of users are displayed. By displaying one or more members of the group of users, the user can choose to communicate with an individual user.

According to the twenty-seventh embodiment of the invention in any of the twenty-fifth or twenty-sixth embodiments the list of members of the group is used to facilitate communication between the user and members of the group of users.

According to the twenty-eighth embodiment of the invention in any of the preceding embodiments, the user computer of the electronic document held on the user computer, a chat dialogue is displayed enabling the user to exchange messages with members of the group of users.

According to the twenty-ninth embodiment of the invention, in the twenty-eighth embodiment, upon sending a message to members of the group of users through the chat dialogue, the message is displayed in the chat dialogues on the computers of members of the group, who are currently accessing the electronic document. By displaying the message to the members accessing the document, the user can communicate with the member in real time.

According to the thirtieth embodiment of the invention in the twenty-eighth twenty-ninth embodiment sending a message to members of the group of users through the chat dialogue, the message is displayed in a newsfeed on the computers of members of the group, who are currently not accessing the electronic document. Even if the member is not accessing the document at the moment, providing the message on newsfeed allows the member to then open the document and also participate in real time chat conversation.

According to the thirty-first embodiment of the invention in one of the twenty-eighth to thirtieth embodiments, upon sending a message to members of the group of users through the chat dialogue, the message is stored on the server computer, associated with a disconnected-list of members of the group whose computers are currently not connected to the server computer.

According to the thirty-second embodiment of the invention, in the thirty-first embodiment upon reconnection of a user computer of a member on the disconnected list to the server computer, the message stored on the server computer is transmitted to the reconnected user computer. For the members currently not online, by saving the message on the server and transmitting it to members as soon as they get online, the members can be contacted even if they were not online, and this allows the members to communicate between them.

According to the thirty-third embodiment of the invention in one of the twenty-eighth to thirty-second embodiment the message can be an audio message. This allows the chat to be an audio communication such as an audio chat.

According to the thirty-fourth embodiment of the invention in one of twenty-eighth to thirty-second embodiments the message can be a video message. This allows the chat to be a video communication such as a video chat.

According to the thirty-fifth embodiment of the invention in one of twenty-eight to thirty-second embodiment messages can include an electronic document, which is uploaded to the server computer and then downloaded by members of the group. This provides the chat dialogue with a secure file transfer interface in order to allow document transfer through the server computer between the user and the member of the group.

According to the thirty-sixth embodiment of the invention, in any of the preceding embodiments the user computer receives from the server computer for the electronic document held on the user computer, a list of members of the group of users who are currently accessing the electronic document.

According to the thirty-seventh embodiment of the invention in the thirty-sixth embodiment upon access on the user computer of the electronic document based on whose bit representation a group has been identified, members of the group currently accessing the electronic document are displayed. Providing the user with the list of users currently accessing the document enables communicating with the users in the list of users currently accessing the document with a possibility to start a real time chat conversation with any user on that list.

According to the thirty-eighth embodiment of the invention, in one of thirty-six or thirty-seventh embodiment upon access on a user computer of the electronic document held on the user computer, the user can send a message to a member of the group of users currently not accessing the electronic document, asking the member to access the electronic document. A request asking the user to access the document can be sent such that once the user accesses the document, a real time communication with particular reference to the document can be made.

According to the thirty-ninth embodiment of the invention, in any of the preceding embodiments the user computer creates for the electronic document held on the user computer a coordinate system, determines the coordinates of a user selection within the electronic document, and sends the user selection coordinates to members of the group of users. The user can point to a particular location on the document so that a member of the group can understand where the user is pointing to on the document. This allows a real time and easy communication with the users and enhances the understandability of the users.

According to the fortieth embodiment of the invention, in the thirty-ninth embodiment the user computers of members of the group of users use the transmitted coordinates to indicate the location of the user selection within the electronic document.

According to the forty-first embodiment of the invention in any of the preceding embodiments, the steps as defined in the first, second or third embodiments respectively, are performed for all electronic documents held on the user computer. This allows the user computer to automatically select all the user documents on the computer and perform the function in order to associate the document with the user and thereby enabling communication.

According to the forty-second embodiment of the invention in any one of the first to fortieth embodiment, the steps as defined in the first, second or third embodiments respectively, are performed for electronic documents held in one or more user-specified directories on the user computer. This allows the user computer to automatically select all the documents on the locations specified by the user and perform the function in order to associate the document with the user and thereby enabling communication.

According to the forty-third embodiment of the invention in any one of the first to fortieth embodiment, the steps as defined in the first, second or third embodiments respectively are performed for electronic documents of one or more user-specified document types or file types held on the user computer. This allows the user computer to automatically select all the documents of a particular type as defined by the user and perform the function in order to associate the document with the user and thereby enabling communication.

According to the forty-fourth embodiment of the invention, in any one of the first to fortieth embodiment, the steps as defined in the first, second or third embodiments respectively are performed for one or more individually selected electronic documents held on the user computer. This allows the user computer perform the function in order to associate the document with the user and thereby enabling communication for the documents which are manually selected by the user.

According to the forty-fifth embodiment of the invention, in any one of the first to fortieth embodiment, the steps as defined in the first, second or third embodiments respectively, are performed for electronic documents which have been received on the user computer in a user-specified way. This allows the user computer to automatically perform the function in order to associate the document with the user and thereby enabling communication on the documents received by the user in a specified way.

According to the forty-sixth embodiment of the invention, in any one of the first to fortieth embodiment, the steps as defined in the first, second or third embodiments respectively are performed for the newly received electronic document. This allows the user computer to automatically perform the function in order to associate the document with the user and thereby enabling communication on the newly received electronic documents.

According to the forty-seventh embodiment of the invention, in any of the preceding embodiments, a screen of the user is shared with one or more members of the group.

According to the forty-eighth embodiment of the invention, in any of the preceding embodiments the electronic document can be a text file, an image file, a sound file, a video file, a source code file, a script file, an archive file, a spreadsheet file, a presentation file , a font file or a database file.

A forty-ninth embodiment of the invention provides a server computer adapted to perform the method according to the first embodiment, or according to any one of fourth to the forty-eighth embodiment when dependent on the first embodiment.

A fiftieth embodiment of the invention provides a user computer adapted to perform the method according to the second embodiment, or according to any one of the fourth to the forty-eighth embodiment when dependent on the second embodiment.

A fifty-first embodiment of the invention provides a system comprising a server computer and a user computer, the system being adapted to perform the method according to a third embodiment, or according to any one of fourth to forty-eighth embodiment when dependent from third embodiment.

A fifty-second embodiment of the invention provides a computer program having instructions for performing a method according to any one of first to forty-eighth embodiment.

### Brief description of the drawings

Fig 1. shows an overall system in accordance with the invention;
Fig2. shows the system with various blocks performing the functions in accordance with the invention;
Fig 3. shows a data structure held by the server, reflecting association between users and electronic documents;
Fig4. shows a flowchart illustrating the detailed steps which are performed while associating the user to the document code in the server computer.
Fig 5. shows a GUI screen on a user computer according to an implementation of the present invention.

### Detailed description

Embodiments of the present invention will now be discussed with reference to the enclosed Fig.s. However, a person skilled in the art will readily appreciate that the detailed description given herein with respect to these Fig.s is for explanatory purposes only as embodiments of the present invention may extend beyond these embodiments.

Methods and apparatus described herein generally relate to the generation of groups based on documents and for the facilitation of communication between users having the document. The electronic document can be a text file, an image file, a sound file, a video file, a source code file, a script file, an archive file, a spreadsheet file, a presentation file, a font file, a database file or any other data which can be represented in a bit formation of binary values. The communication being facilitated is preferably a message communication.

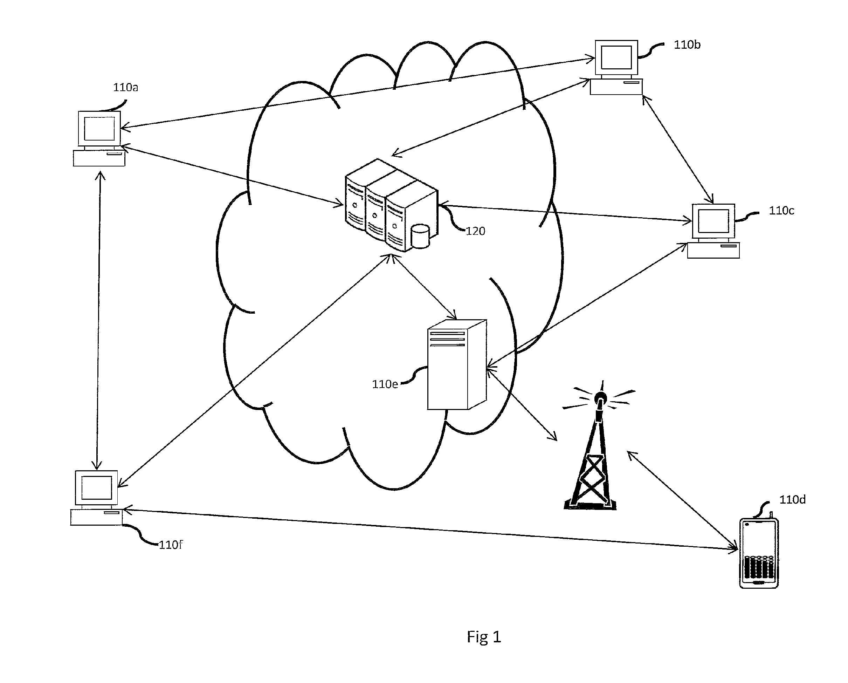

Fig.1 illustrates schematically an overall system 100 for facilitating communication between users having a particular electronic document. System 100 comprises a server computer 120, and one or more user computers 110. The user computer can be, for example, a personal computer, a handheld computing device or any electronic device which may be able to access and view an electronic document. A user computer can also be data storage server (110c) on the cloud (i.e storage on cloud computing) which is accessed through another computer via the Internet.

The user computers are connected together by the Internet or any other computer network to the server computer, thereby forming a distributed network of a client-server architecture. Alternatively, the user computers can form a peer to peer network without the need for a separate server computer. In such an instance where the network is a peer-to-peer network, one of the user computers performs the functions performed by the server computer described in this invention. The server computer may also be implemented by several or distributed server computers, e.g. a server cluster, or it may be implemented distributed between various user computers, or between one or more server computers and one or more user computers.

As explained earlier, the interconnection between the user computers is either wired or wireless, and the user computers can be connected via the Internet to a large number of user computers in multiple locations. Such an interconnection however can also be implemented within a smaller geographical location or by placing restrictions on access to ensure only a limited number of user computers are connected, for example within an intranet or a VPN network.

While Fig. 1 only shows two user computers 110, embodiments of the present invention can include any number of user computers 110. Furthermore, instead of server computer 120, system 100 can also comprise one user computer 110 executing the functionality of server computer 120, distribute the functionality of server computer 120 between multiple user computers 110 or distribute the functionality of server computer 120 between server computer 120 and one or more user computers 110, or between several server computers, e.g. a server cluster.

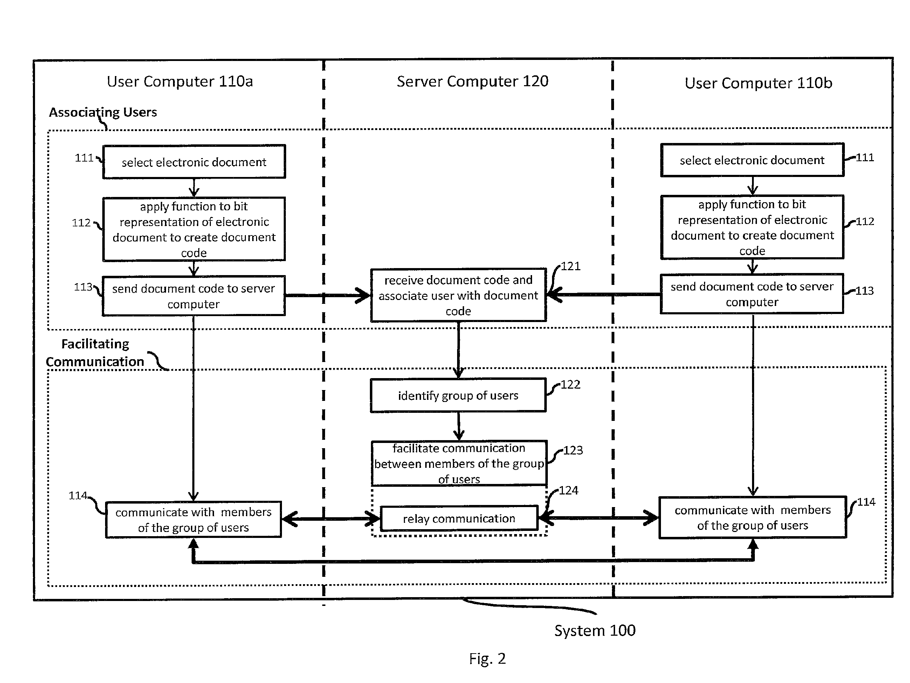

Fig. 2 illustrates the overall functioning of the invention in the system 100. In Fig. 2, bold arrows symbolize a step in which data is transmitted, whereas non-bold arrows merely symbolize the flow of the process.

The invention can broadly be described by performing the function of user association and facilitation of communication between members of a group who are associated with an electronic document. In order to better describe the present invention, the illustration provided includes all the features into a single Figure to provide a complete overview. However, a skilled person will understand that the steps described by the blocks need not be in concurrence with each other or be performed immediately one after the other, but can be performed at various times or be interrupted by an undefined time interval. In particular, there may be a time gap between user association and facilitation of communication between members of the group. Furthermore, the skilled person will understand that the steps described by the blocks need not necessarily be performed in the order as shown in Fig. 2. For example, association of a user with a document code may be performed after identification of a group of users.

### User association

In order to facilitate communication between users having the same document, a user group is formed which is associates the users having the same electronic documents. The process of user association as illustrated in Fig. 2 will now be described in detail.

In block 111 a user computer selects an electronic document for which other user computers having the same electronic document are to be identified in order to subsequently facilitate communication with these users according to the present invention.

The selection of the electronic document is either made by the user by selecting the particular electronic document or group of documents or the selection may occur either partially or fully automatic by the computer. For instance, the user may select a particular electronic document, or select all electronic documents in a particular data location such as a file directory or a memory device. In such case, the steps shown in Fig. 2 are repeated for all the files on the selected data location.

The selected electronic document is then considered in its bit representation form. The bit representation of an electronic document is the binary bit data of the document as it is stored in the physical data location in a machine readable digital data form.

In block 112, the user computer applies a function to the bit representation of the selected electronic document. A function according to the present invention is a set of instructions, an algorithm or a computer method, which when executed in the computer takes the binary representation of an electronic document as an input, performs a specific task and provides a specific output. In the present invention, the function is an algorithm programmed such that, on execution of the algorithm by a computing device, a unique identifier is generated for every unique electronic document, and the electronic document can be identified based on the unique identifier. Therefore, when the electronic document is input to a function module which runs the algorithm it outputs a unique identifier code for each document. Such a unique identifier which is a digital code in a bit form is called a document code, and can be either represented in a binary form or as a digital form. In this context, generation of "unique" identifier means that the likelihood of the function applied to two documents with different bit representation results in identical document codes is very low, e.g. smaller than 1%.

The function is designed such that the unique document code generated is the same for identical electronic document irrespective of on where the function is applied. So the unique document code generated by the function on a user computer 110a for a particular electronic document is the same as the unique document code generated by the function on a user computer 110b for the same electronic document. This is to ensure that different user computers 110a-e which may hold the same electronic document can be identified and associated with the same document to form a group irrespective of where the function is performed.

Furthermore, the function needs to be configured such that the bit representation of the resulting unique document code differs from the electronic document itself. This is to ensure that the system facilitates communication between the users without exchanging the electronic document itself. Finally, the function is additionally configured such that the bit representation of an electronic document cannot be obtained from the bit representation of the generated document code, i.e. the function is not reversible. The function needs to be irreversible because otherwise the original document would indeed be sent to server, albeit in an obfuscated version.

In the preferred embodiment of the present invention, this function is a hash function. Therefore, applying a hash function to the bit representation of the electronic document provides a unique hash value which is the unique document code in accordance with the present invention. Different hash functions are considered based on the required output value, the randomness, speed, the length of the hash etc. A person skilled in the art will recognize, however, that any other function configured to meet the above characteristics can be used to generate the document codes.

In the preferred embodiment, the user computer applies the function to the document. However, it can also be envisaged by a skilled person that a separate electronic device connected to the user computer applies the function and provides the document code to the user computer for further application.

As already described with respect to the document code generating function, document codes for electronic documents with the same bit representations must be the same and document codes for electronic documents with different bit representations should be different in order to assure correct association of the user to the electronic document by the server computer 120. Therefore, document codes for electronic documents should differ from one another with a high probability. As mentioned above, it is preferable that they differ at least with 99% probability. The present invention can however be implemented with any other probability which is suitable for a reliable user association.

Additionally to being different in terms of their bit representation, in some embodiments of the present invention, the bit representation of the document codes is much shorter in comparison to the bit representation of the document. In some embodiments, the bit representation of the document code generated after performing the function is at least 1000 times shorter than the bit representation of the document in general. This reduces the amount of data which needs to be transferred to the server computer, and it also eliminates the possibility of reversing the function which generated the document code from the bit representation of the electronic document. Finally, it also reduces the amount of storage required to store the document code. This is especially advantageous when a large number of document codes need to be stored on the server as it will be explained in detail later.

As explained above, the document codes are created for the selected electronic documents. Therefore in some embodiments of the invention, the unique document code is created for all electronic documents held on user computers 110a-d. In another embodiment, the user can specify one or more directories and limit the document code generation to electronic documents held in these one or more directories. In other embodiments, the document code generation can be limited to files of certain file types, to electronic documents individually selected by the user or to electronic documents received in a user-specified way, such as by email, by Bluetooth, downloaded from a specific URL, or any other way, or for any electronic document newly arrived on user computers 110a-d. The different selections of electronic documents listed in this description are however not limited to the above examples and can include any other way of selecting electronic documents for the document code creation.

In block 113, the unique document code created after applying the function in the user computer 110 is sent to the server computer 120. However, not all the document codes are sent to the server and only the unique document codes are sent. In case there is a duplicate electronic file in the same user computer for which a function is performed and document code has been generated, such duplicate document codes are preferably not forwarded to the server.

In the preferred embodiment, the server identifies the user based on a connection which is established between the user computer and the server computer and which is associated to the user on the server.

In some embodiments, the user computer 110 transmits a user identifier, to the server computer 120. In one embodiment, the user identifier is transferred together with the document code. The user identifier uniquely identifies which user computer has sent the document code to server computer 120. This user identifier is either created by server computer 120 for each of (the users of) the user computers, or by the user computer 110 themselves based on certain criteria applicable to all the user computers. The user identifier may be based on the network MAC ID of the user computer, or other identity such as an username selected by the user or a pseudonym (or alias) generated by the server or user computer based on the criteria of selection. A user computer may have multiple users, so it is necessary that each user has a unique user identifier. Therefore in case of the username being selected by the user or a user identifier being generated by the user computer, certain criteria for identifier selection are followed such that each user computer is provided with a unique user identifier. As it will be understood by the skilled person, in case of a user computer being a user account on the cloud, the user identifier can be a user generated username using a logon and/or a password which associates the user identifier to the cloud storage space. Furthermore, in such cases, the skilled person also understands that the user identifier is not associated to the cloud server containing the user account but for individual accounts instead. Therefore, a single cloud server which forms a user computer (110e) may contain multiple users having unique user identifier relating to different users. By providing the possibility of the user identifier as a login and/or a password, the user has the option to communicate with other users even if he accesses a different user computer. The user identifier is transmitted by the user computer upon initiation of the connection to the server computer such that user computer does not need to send the user identifier every time a new document code is transmitted to the server computer. That is, the user identifier is valid as long as a session of connection is open between the user computer and the server computer.

Alternatively, in some embodiment of the invention, if no user identifier is generated earlier, the user identifier is created by server computer 120 after receiving the document code or created by the user computer 110 automatically before sending the document code.

In some embodiments, in order to provide the user with a secure communication, server computer 120 has no information of the correlation between the true identity of a user and his user identifier. In such cases an alias identifier is created by the server which associates it to the user identifier of the user computer 110. In other embodiments, the user identifier can comprise a login and a password such as those required in case of cloud computer associated storage. Instead of being sent together with the document code, the user identifier can also be sent in some embodiments upon initiation of the connection between user computer 110 and server computer 120. A person skilled in the art will appreciate however, that embodiments of the present invention are not limited to the above user identifier creations and transmissions and that the user identifier creation and transmission can be implemented in any other way.

The document code and the user ID can be sent to server computer 120 for example wirelessly through a WLAN network, Bluetooth, NFC or any other wireless communication method or wired for example through a LAN or any other wired communication method.

In block 121, server computer 120 receives the document code along with the user ID sent by the user computer (110a - 110e). In case the user ID is not associated with the document code, the server determines which user computer has transmitted the document code, e.g. on the basis of the connection on which the document code was received, and associates the user ID with the particular document code.

In the preferred embodiment, the user computer 110 transmits a user ID to server computer 120 for association. Server computer 120 identifies the user with said user ID and uses it to associate the document code with the user ID in order to know which user sent the document code.

### Facilitating communication between users

The server facilitates the communication between the user computer and members of a group of users associated with the electronic document as it will be described below in detail with reference to Fig.2.

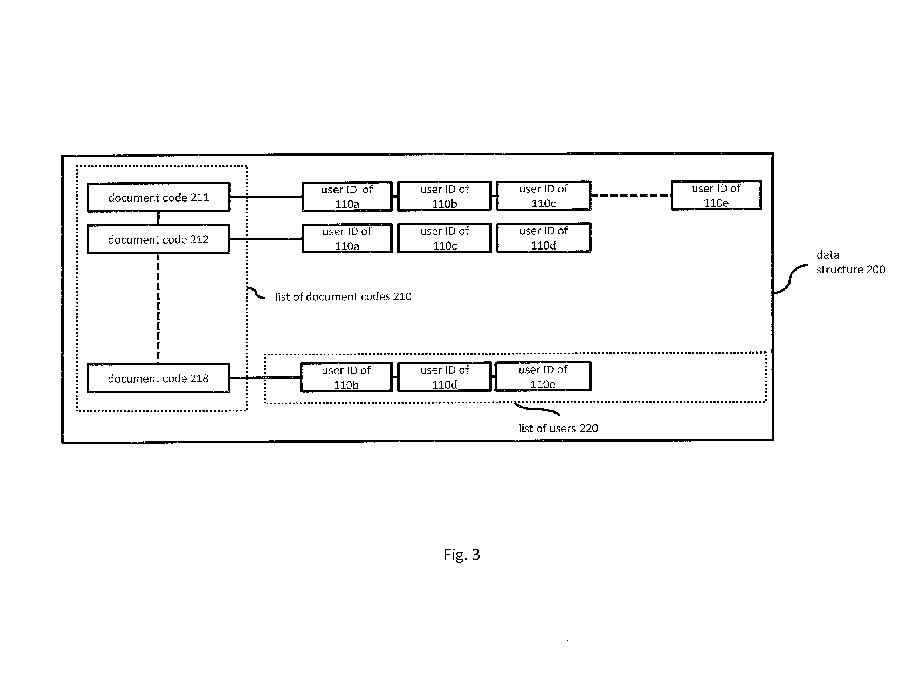

At block 122, server computer 120 identifies a group of users who are associated with the document code and with whom communication can be facilitated. As stated above, since the function used for generating the document codes generates the same document code for electronic documents with the same bit representation, server computer 120 can identify all users who have sent a certain document code to the server. In other words, server computer 120 can identify all users who informed server computer 120 about the fact that they hold the electronic document on whose basis the document code was formed. The group of users may comprise all the users associated with the document; however, it is possible that not all the users associated with the document code form a part of the group. A group of users identified as associated with the document are the users with whom communication can be facilitated. The server computer can be programmed to identify the group of users from the list of users associated with the electronic document according to certain criteria. The identification of a group of users will be further explained below with regard to Fig. 3.

After having identified a group of users which hold the same document, server computer 120 can facilitate communication between the user computers 110 of members of the group at block 123. In principle, server computer 120 can facilitate communication between members of a group of users either by relaying the communication between members of the group (block 124) or by providing to members of the group information about other members of the group such that the members can communicate with each other directly.

In the case of facilitating communication by relaying the communication (block 124), the user computer sends the communication content data to the server, which then relays the communication content data to a user computer or multiple user computers in the group. By relaying the communication content data between the users, the server provides the user with privacy since the other users do not have information about the identity or address of the user. The relaying of the communication content data preferably occurs on a connection between each of the user computers and the server computer. A user can however allow the other members of the group to obtain information from the server to enable them to communicate directly with the user, i.e. not via the server.

In the other case (not shown in Fig. 2), of facilitating communication by providing information such that the members can communicate with each other directly, the server computer transmits to a user computer information about members of the group such that the user computer can directly communicate with these members, i.e. not via the server. The information can be contact information about members of the group such as email addresses, IP addresses. The information can also be comprised of just user identifiers of members of the group, in case the user already has the contact information of the members and just needs the information about which members form part of the group.

Facilitation either occurs automatically when the user opens or otherwise accesses the document, or whenever the user requests the server to provide information about the other users associated with the document code on the server, i.e. about the group of users associated with the electronic document.

A communication facilitation request may be sent from user computer 110 to server computer 120, comprising the document code for the electronic document which was created by user computer 110 and a request for the list of users who are members of the group of users.

In case of automatically facilitating communication between the group members, the server computer 120 may transmit to (preferably all) users who are members of the group information about (preferably all) other members of the group. This may occur whenever the user opens or otherwise accesses the electronic document on the user computer.

Though preferably this group information is available on the server and the information is transmitted by the server, in some embodiments, this information can also be transmitted between user computers 110 directly. Though not explicitly illustrated in the figure, prior to communicating with the members of the group, the user computer requests the information about users in the group associated with the electronic document, either automatically on opening the document or manually by requesting the information.

When the user is provided with the information and is interested in communicating with another user holding the same document, the user either requests the server computer to initiate a communication interface with the selected user (relay) or directly initiates a communication interface with the selected user. In case of initiating the communication interface through the server computer, the server computer in block 123 will initiate a communication interface with another user holding the same electronic document. Alternatively the user computer with the information about other users of the group can directly initiate communication with the other user. Once the communication interface is facilitated, the user is able to communicate with another user of the group associated with the electronic document either through the server or directly (block 114).

As a person skilled in the art will understand, the communication between the user computers either via the server (relay) or directly follows normal communication protocols depending on the network associated with each of the user computers and the server. It is also to be understood that the communication might either be a one-to-one communication between the user computers or a multicasting by one of the user to all the other users of the group.

In Fig. 2, the two exemplary user computers 110 seem to execute blocks 111, 112 and 113 concurrently. However, these blocks can be executed by any of the plurality of user computers 110 at any time independently of each other. The server computer 120 executes blocks 121 and 122 every time it receives a document code or user identifier from the user computer 110. While block 123 is indicated as following block 122, block 123 is effectively executed constantly by server computer 120 as soon as at least one group has been determined or whenever the user computer initiates a request for facilitation of communication.

### Data structure of the users associated with the electronic document

Fig. 3 illustrates a data structure 200 used by server computer 120 to associate users in block 122 of Fig. 2. Server computer 120 maintains a list of document codes 210 comprising one or more document codes 211 to 218. Furthermore, server computer 120 maintains a list of users 220 depending from each document code 211 on the list of document codes 210, which preferably comprises the user identities of all users from whom server computer 120 received the same document code 211. For example, for a particular document code 211, user identifier relating to user computer 110a, 110b, 110c and 110e are associated to the common electronic document.

Though the user identifier which is transmitted from the user computer to the server as described above may be used to identify the user associated with the document, the server may use other representations which allow identification of the user on the server.

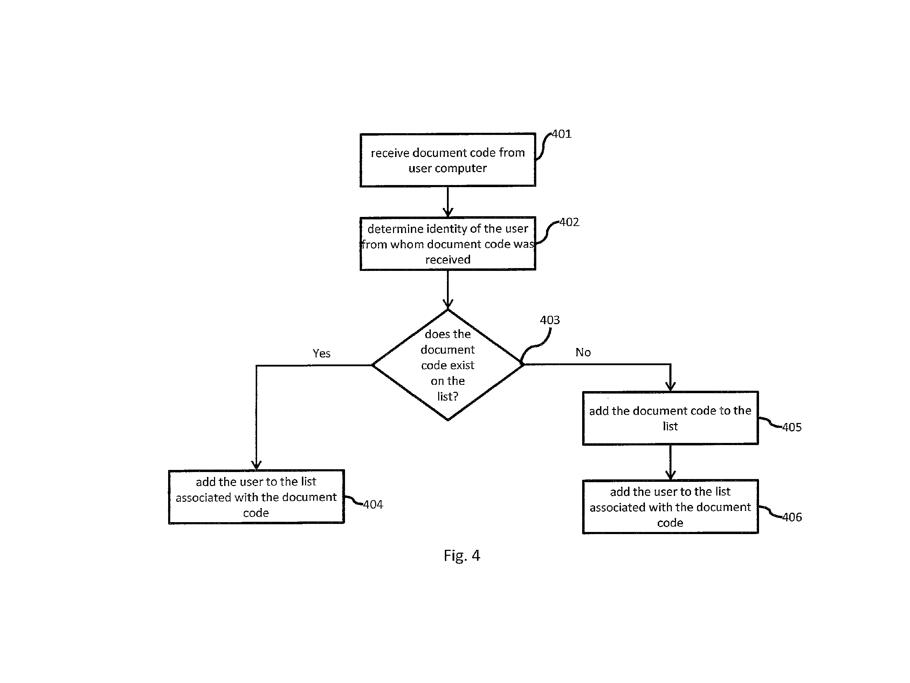

A preferred process of associating the document code with the users as performed in block 121 on the server in Fig.2 is now explained in detail with reference to Fig.4. Firstly, the server receives the document code from the user computer in block 401. The server then determines the identity of the user from whom the document code was received in block 402. As explained earlier, a user identifier may be transmitted by the user computer together the document code, or the user may be identified by the server based on the user which is associated with the connection on which the document code was received. When server computer 120 receives a document code 211-218 from user computer 110, server computer 120 in block 403 identifies if the received document code is already in the list of document codes 210. If the received document code is on the list, the server computer 120 in block 404 adds the user from whom server computer 120 received the document code to the list of users 220 (e.g. by storing the user identifier on the list). If the received document code is not on the list of document codes 210, server computer 120 in block 405 adds the received document code to the list of document codes 210 and creates a new list of users, and in block 406, adds the user from whom server computer 120 received the document code to the newly created list of users 220.

In some embodiments, data structure 200 information is stored in a data base on server computer 120. In other embodiments, the server computer 120 sends the list of users 220 associated with a certain document code 211 to one or more user computers 110 who sent said document code 211 to server computer 120. These user computers 110 then store the list of users 220.

### GUI screen on the user computer

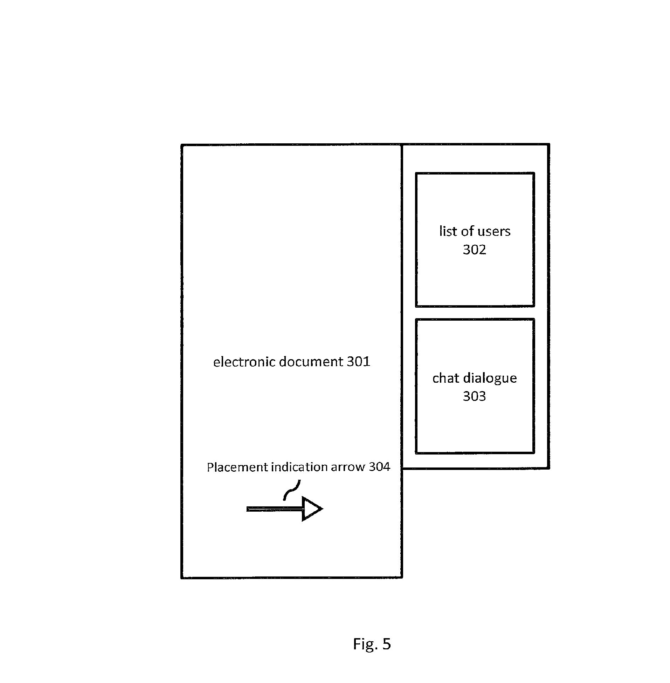

Fig. 5 shows an exemplary graphical user interface (GUI) for an electronic document 301 being accessed by a user on a user computer 110. Upon opening a window with an electronic document 301, a window with a list of users 302 and a window with the chat dialogue 303 are displayed. Electronic document 301 is any electronic document for whose bit representation a document code has been generated as described above. This list is displayed in the window of list of users 302 in order to facilitate communication between the user currently accessing electronic document 301 and members of the group of users. The users displayed on the list of users 302 correspond to the list of users 220 in Fig. 3.

The window with a list of users 302 is either opened automatically whenever the electronic document 301 is opened or only opened when the user requests for the group of users associated with the electronic document. Similarly, the window with the chat dialogue 303 providing the communication interface with users in the group is opened automatically whenever the electronic document 301 is opened only when a communication interface with another user of the group is initiated. In Fig.5, these are depicted on the right side of electronic document 301 but embodiments of the present invention are not limited to this placement of the list of users and the chat dialogue.

The list of users 302 can display more information additionally to the list of users who are members of the group of users. In some embodiments, server computer 120 sends to one or more user computers 110 a list of users currently accessing electronic document 301. This list of users currently accessing electronic document 301 can in some embodiments also be displayed in the list of users 302. Furthermore, in some embodiments, a user can send a message to another user who is displayed in the list of users 302 as currently not accessing electronic document 301 to ask said user to open electronic document 301.

Chat dialogue 303 can be used by the user to communicate with all users who are members of the group of users associated with electronic document 301. The communication through chat dialogue 303 corresponds to the communication with members of the group of users of block 113 and its facilitation of block 123 in Fig. 2. This chat dialogue 303 can be used to exchange messages with members of the group of users. If a message is sent through chat dialogue 303, it is displayed in the chat dialogues of users currently accessing electronic document 301. By displaying the message to the members accessing the document, the user can communicate with the member in real time. One or more members can then reply to the message, thereby creating a chat dialogue between the users. In some embodiments, if a user who is a member of the group of users is currently not accessing electronic document 301, the message is displayed in a newsfeed on said user's user computer 110. Therefore, even if the member is not online at the moment, it allows the members access to the message through other means such as newsfeed and enables participating in the communication. Furthermore, in some embodiments, server computer 120 maintains a list of users currently disconnected from server computer 120. For these users, server computer 120 stores all messages sent through chat dialogue 303 and associates them with said disconnected-list. Upon reconnection, server computer 120 transmits these saved messages to the users.

In some embodiments, the communication content data contain the messages exchanged through chat dialogue 303 and can be text messages. Additionally to text messages, the message can be, in some embodiments, an audio message or a video message or be combined in order to provide video chat capability or can be an electronic document which can then be downloaded by other users through chat dialogue 303. However, a person skilled in the art will recognize that other kinds of messages can be exchanged through chat dialogue 303 and that the message types stated above are merely examples of the present invention.

Furthermore, Fig. 5 depicts a placement indication arrow 304 on electronic document 301. The preferred embodiments of the present invention provide an arrow 304 which indicates to other users who are members of the group of users where in the electronic document 301 a user has clicked with a pointing device, such as a mouse or any other pointing device. This is used when the user would like to point out to other users in the chat a part of the document to which the users' attention might be required. To determine the position of a click, user computer 110 determines a coordinate system for electronic document 301. This coordinate system can for example be an x-y-coordinate system but the present invention is not limited to x-y-coordinate systems. Based on this coordinate system, user computer 110 determines the coordinates of the click and transmits them to other members of the group of users. Based on these coordinates, placement indication arrow 304 will be displayed on all user computers 110 currently accessing electronic document 301.

In some embodiments of the present invention, it is further possible to share a user's screen with other members of the group of users.

The means necessary to implement the methods described above can for example be implemented by a computer such a desktop computer, laptop or smart phone. Additionally, the methods described above can be implemented as a computer program stored on a non-volatile computer readable medium, such as a hard disk, a CD-ROM or a memory stick, which can instruct a processor to perform the methods described above.

Various embodiments of methods relating to the generation of groups based on documents for the facilitation of communication have been described. While these embodiments have been described in the context of Figures 1 to 4, many modifications and variations are possible. The above description is therefore for illustrative purposes only and is not intended to be limiting. Accordingly, the scope and breadth of the present invention should not be limited by the specific embodiments described above and should instead be determined by the following claims and their full extent of equivalents.

## Claims

1. A computer-implemented method for operating a server computer for facilitating communication between users, the method comprising the steps of:
receiving a document code from a user computer, the document code having been created for an electronic document held on the user computer by applying a function to the bit representation of the electronic document, the function being configured such that the document codes for electronic documents with identical bit representations are identical, such that the document code for an electronic document is different from its bit representation, and such that the bit representation of an electronic document cannot be obtained from the document code;
associating the user with the document code;
using the document code created by the user, identifying a group of users who are associated with the document code; and
facilitating communication between the user and members of the group of users.

2. A computer-implemented method for operating a user computer for facilitating communication between users, the method comprising the steps of:
creating a document code for an electronic document held on the user computer by applying a function to the bit representation of the electronic document, the function being configured such that the document codes for electronic documents with identical bit representations are identical, such that the document code for an electronic document is different from its bit representation, and such that the bit representation of an electronic document cannot be obtained from the document code;
sending the document code to the server computer; and
communicating with members of a group of users who were identified by the server computer, using the document code created by the user, to be associated with the document code, the communication being facilitated by the server computer.

3. A computer-implemented method for operating a system for facilitating communication between users, the method comprising the steps of:
on a user computer, creating a document code for an electronic document held on the user computer by applying a function to the bit representation of the electronic document, the function being configured such that the document codes for electronic documents with identical bit representations are identical, such that the document code for an electronic document is different from its bit representation, and such that the bit representation of an electronic document cannot be obtained from the document code;
transmitting the document code from the user computer to a server computer;
on the server computer, associating the user with the document code, using the document code created by the user computer, identifying a group of users who are associated with the document code, and facilitating communication between the user and members of the group of users; and
on the user computer, communicating with members of the group of users.

4. The computer-implemented method according to any of the preceding claims, wherein the server computer maintains a list of document codes, and for each document code on that list, a list of users associated with the document code.

5. The computer-implemented method according to any of the preceding claims, wherein the function is a hash function.

6. The computer implemented method according to any of the preceding claims, wherein communication between the user and members of the group of users is facilitated by the server computer transmitting information about members of the group of users to the user.

7. The computer-implemented method according to any of the preceding claims wherein the user communicates with members of the group of users by exchanging communication content data either directly, i.e. not through the server computer, or by having the communication content data relayed by the server computer to members of the group of users.

8. The computer-implemented method according to any of the preceding claims, wherein a user identifier is transmitted from the user computer to the server computer, the server computer identifies the user with the help of the user identifier, and the association of the user with a document code is based on the identification of the user.

9. The computer-implemented method according to any of the preceding claims, wherein the user computer holds, for the electronic document held on the user computer, a list of members of the group of users, and wherein the information identifying the list of members of the group of users has been transmitted from the server computer to the user computer.

10. The computer-implemented method according to any of the preceding claims, wherein, upon access on the user computer of the electronic document held on the user computer, one or more members of the group of users are displayed and a chat dialogue is displayed enabling the user to exchange messages with members of the group of users.

11. The computer-implemented method according to any of the preceding claims, wherein the communication between the user and members of the group of users being facilitated is a message communication.

12. Server computer adapted to perform the method according to claim 1, or according to any one of claims 4 to 12 when dependent from claim 1.

13. User computer adapted to perform the method according to claim 2, or according to any one of claims 4 to 12 when dependent from claim 2.

14. System comprising a server computer and a user computer, the system being adapted to perform the method according to claim 3, or according to any one of claims 4 to 12 when dependent from claim 3.

15. Computer program having instructions for performing a method according to any one of claims 1 to 12.
